Europäisches Patentamt

(19) European Patent Office

Office européen des brevets

(11) Numéro de publication : **0 053 145**
**B1**

(12) **FASCICULE DE BREVET EUROPÉEN**

(45) Date de publication du fascicule du brevet :
**09.10.85**

(21) Numéro de dépôt : **81901520.7**

(22) Date de dépôt : **04.06.81**

(86) Numéro de dépôt international :
**PCT/FR 81/00071**

(87) Numéro de publication internationale :
**WO/8103583 (10.12.81 Gazette 81/29)**

(51) Int. Cl.⁴ : **H 01 M   4/80, H 01 M   4/28,
H 01 M   4/42**

(54) **PROCEDE DE FABRICATION D'ELECTRODES POUR APPAREILS ELECTROCHIMIQUES FONCTIONNANT AVEC UNE SOLUTION AQUEUSE OU ANALOGUE.**

(30) Priorité : **05.06.80 FR 8012552**

(43) Date de publication de la demande :
**09.06.82 Bulletin 82/23**

(45) Mention de la délivrance du brevet :
**09.10.85 Bulletin 85/41**

(84) Etats contractants désignés :
**AT CH DE GB LI LU NL SE**

(56) Documents cités :
**DE-B- 1 114 870
FR-A-   360 664
FR-A- 1 077 036
FR-A- 1 080 582
FR-A- 1 562 689
FR-A- 2 088 802
FR-A- 2 407 575
US-A- 3 248 266
US-A- 3 323 915
US-A- 3 377 202**

(73) Titulaire : **SOCIETE D'ETUDES ET DE RECHERCHES DES SOURCES D'ENERGIE NOUVELLES, (SERSEN)
"La Castagne", route de Bullion
78830 Bonnelles (FR)**

(72) Inventeur : **BERGER, Michel
F-78470 Saint Lambert des Bois (FR)**
Inventeur : **LYS, Jacques
25 Rue Magenta
F-78000 Versailles (FR)**
Inventeur : **DEMAIRE, Georges
"La Castagne" Route de bullion
F-78830 Bonnelles (FR)**

(74) Mandataire : **Phélip, Bruno et al
c/o Cabinet Harlé & Phélip 21, rue de la Rochefoucauld
F-75009 Paris (FR)**

## Description

La présente invention est relative à un procédé de fabrication d'électrodes pour accumulateurs, piles ou électrolyseurs fonctionnant avec une solution aqueuse ou analogue.

L'invention est plus particulièrement destinée à des électrodes pour accumulateurs. On sait que la durée de vie d'un accumulateur dépend, dans une très large mesure, de la tenue de ses électrodes. Une électrode d'accumulateur au plomb, par exemple, est formée d'une plaque de plomb sur laquelle on a fait adhérer une couche d'oxyde. La désagrégation de cette couche ou, au contraire, le développement exagéré de cristaux, sont cause de courts-circuits qui entraînent la mise hors d'usage de la batterie.

La présente invention a pour objet de fournir des électrodes ayant une robustesse considérablement accrue par rapport aux électrodes de l'art antérieur, pour un prix de revient peu élevé.

Le document FR-A-2 407 575 décrit, entre causes, une électrode comportant un support formé de cuivre déployé sur lequel on a pulvérisé de la poudre d'une combinaison de zinc et magnésium dans les proportions en poids de 84 % de Zn et 16 % de Mg, cette poudre étant dispersée dans un solvant fixateur tel que l'acétate de cellulose. Après imprégnation du support, on procède à un séchage à 100 °C pendant dix minutes.

Ce document ne décrit pas les moyens permettant d'obtenir une parfaite liaison entre la grille et le métal fritté et, par suite, un bon écoulement de courant électrique. En outre, le procédé décrit oblige à préparer séparément le composé de Mg et Zn avant de le pulvériser.

Le procédé de l'invention permet de surmonter ces difficultés. En effet l'invention fournit un procédé de fabrication d'une anode comprenant un support formé d'une plaque ou grille métallique recouvert par une combinaison métallique de zinc et magnésium, ce procédé comportant le dépôt sur les deux faces dudit support d'une poudre métallique mélangée avec un liant provisoire, suivi d'un séchage, ledit procédé étant caractérisé en ce que :

la poudre métallique est un mélange de poudre de zinc électrolytique et de poudre de magnésium dans les proportions en poids 84 : 16,

le dépôt du mélange de poudre métallique et du liant provisoire est soumis à une compression à une pression de 1 tonne/cm² (environ 10⁸ Pa),

le séchage est suivi d'un frittage, opéré à une température de 500-600 °C dans un four à micro-ondes.

La revendication 2 décrit une modalité préférée de ce procédé.

De préférence, le support en forme de plaque est perforé, par exemple en métal déployé.

De préférence aussi, le liant provisoire est formé d'eau et d'un liant organique, par exemple de l'acétate de cellulose ou tout autre liant plastique qui disparaît à haute température, et on durcit ledit liant provisoire par séchage.

De préférence encore, on ajoute à la poudre métallique, si elle est constituée d'un métal relativement peu conducteur comme le fer, une faible quantité de poudre de métal plus conducteur tel que le cuivre, le nickel ou le cadmium.

Suivant une modalité intéressante, pour recouvrir la porosité intérieure du métal fritté avec l'oxyde, on imprègne le métal fritté avec un sel en solution dans un solvant, on évapore le solvant, puis on transforme le sel en oxyde. Par exemple, pour obtenir un revêtement d'oxyde de nickel, on utilise une solution de nitrate de nickel dans l'acétone et on forme l'oxyde in situ par transformation du nitrate en atmosphère oxydante.

En outre, on a trouvé qu'on obtient des résultats meilleurs, en ce qui concerne la durée, lorsqu'on entoure l'électrode d'une membrane présentant de fines perforations.

On va décrire ci-après, à titre d'exemple non limitatif, la fabrication des éléments de batteries zinc/magnésium-cobalt/titane.

### 1) Anode

L'âme est un déployé d'acier inox (à 11 % chrome et 9 % nickel). Les mailles sont grossières (pas de 10 mm). Cette âme est placée entre deux couches de pâte constituée d'un mélange de poudre fine de zinc électrolytique et de magnésium dans la proportion, en poids, de 84 % de zinc et 16 % de magnésium. Cette poudre est mélangée avec de l'acétate de cellulose ou analogue et est placée dans un moule sur une épaisseur d'environ 2,5 mm ; on place ensuite le déployé, puis une seconde épaisseur de pâte égale à la première. Par dm², cela représente 20 grammes de chaque côté du déployé. Le tout est pressé à 1 tonne par cm², puis démoulé. A ce moment, l'épaisseur totale est d'environ 2 mm. On laisse sécher 10 heures environ à température ambiante puis la plaque est passée dans un four micro-ondes de 250 MHz (sous argon ou sous vide) à 500/600 °C pendant 10 à 20 secondes (effet de frittage).

Ensuite, sur un des côtés qui, au pressage, a été masqué par 2 barrettes d'acier, on soude par points un profilé en nickel en U qui sert de collecteur.

### 2) Cathode

Sur le même type de profilé que celui décrit ci-dessus, on dispose, soit par trempage, soit au rouleau, une pâte faite uniquement de poudre de nickel et d'acétate de cellulose. Au moment du durcissement, le tout est comprimé entre deux rouleaux sous une pression de 1 tonne/cm² environ. Ensuite, les plaques ou les bandes (si leur fabrication est continue) sont passées dans un four micro-ondes pour frittage (600 °C) pendant 40 secondes. Après ce traitement, les plaques sont lavées à l'acétone, séchées, puis on les trempe dans une solution de nitrate de cobalt et d'oxyde de cobalt dans l'acétone et dans une proportion arrêtée en fonction de l'utilisation de la batterie. A titre d'exemple, pour une batterie de traction dont la résistance interne doit être la plus faible possible, on fixera la proportion à 70 % de cobalt et 30 % de titane. Après séchage à température ambiante, on recommence le trempage (10 minutes environ) et ceci, 3 à 4 fois pour que le fritté ou éponge de nickel soit saturé de solution (le cobalt peut, selon les types de batteries, être remplacé par du nickel, du manganèse ou autre corps dont les oxydes sont fortement électropositifs). Après séchage, les plaques sont mises dans un four oxydant à 200 °C pendant environ 20 minutes (transformation des nitrates en oxydes) puis de nouveau lavées à l'eau distillée tiède, ou, après un nouveau séchage, elles sont hydroxydées dans une solution de potasse de normalité 3 pendant 10 minutes, relavées et enfin séchées. A ce moment, les barres collectrices sont fixées comme pour les anodes (épaisseur totale 1,5 mm).

### 3) Les séparateurs

Ils sont constitués d'une membrane en nylon perforé (0,5 $\mu$m) comprimée entre deux tissus de fibres de polypropylène comprimées. Cet ensemble entoure l'anode et est étanche sur trois de ces côtés, les matières actives étant ainsi ensachées. Les deux côtés latéraux peuvent être fermés par soudage haute fréquence ou collés avec une colle résistant à la potasse, à base de silicones, par exemple.

### 4) Electrolyte

L'électrolyte est composé de la manière suivante (composition pour 1 litre) :

Dans 300 cm$^3$ d'eau distillée on fait dissoudre à chaud (ébullition) 30 g d'hydroxyde de lithium ; après refroidissement, on ajoute 50 g d'oxyde de zinc pur pour saturer l'électrolyte en oxyde de Zn ; puis on ajoute 300 cm$^3$ d'eau distillée et 350 g d'hydroxyde de potassium. Après avoir laissé reposer pendant 3 heures environ, on filtre le tout (filtre fin) et la solution est prête.

Quand la batterie est montée, l'électrolyte est injecté progressivement jusqu'à ce que le niveau soit 2 à 3 mm au-dessus des plaques, quand les éléments frittés et autres absorbants sont remplis.

Avant de rendre la batterie étanche, il faut former celle-ci par 5 à 10 cycles jusqu'à complète disparition de dégagement d'hydrogène. La batterie peut à ce moment être scellée mais une soupape de sécurité est nécessaire.

### Revendications

1. Procédé de fabrication d'une anode comprenant un support formé d'une plaque ou grille métallique recouvert par une combinaison métallique de zinc et magnésium, ce procédé comportant le dépôt sur les deux faces dudit support d'une poudre métallique mélangée avec un liant provisoire, suivi d'un séchage, ledit procédé étant caractérisé en ce que :

la poudre métallique est un mélange de poudre de zinc électrolytique et de poudre de magnésium dans les proportions en poids 84 : 16,

le dépôt du mélange de poudre métallique et du liant provisoire est soumis à une compression à une pression de 1 tonne/cm$^2$ (environ 10$^8$ Pa),

le séchage est suivi d'un frittage, opéré à une température de 500-600 °C dans un four à micro-ondes.

2. Procédé selon la revendication 1, caractérisé en ce que le frittage est opéré en un temps de 10 à 20 secondes.

### Claims

1. Process for the manufacture of an anode incorporating a support formed by a metal plate or grating covered by a metal combination of zinc and magnesium, this process comprising the depositing on both faces of the said support of a metal poweder mixed with a provisional binder, followed by drying, the said process being characterised in that :

the metal powder is a mixture of electrolytic zinc powder and magnesium powder in weight proportions of 84 : 16,

the deposit of the mixture of metal powder and of the provisional binder is subjected to compression at pressure of 1 tonne/cm$^2$ (approximately 10$^8$ Pa),

the drying is followed by sintering, carried out at a temperature of 500-600 °C in a microwave oven.

2. Process according to Claim 1, characterised in that the sintering is carried out over a period of 10 to 20 seconds.

### Patentansprüche

1. Verfahren zur Herstellung einer Anode, die eine aus einer mit einer Zink- und Magnesiummetallkombination bedeckten Metallplatte bzw. -gitter gebildete Unterlage enthält, bei dem ein mit einem temporären Bindemittel vermischtes Metallpulver auf beiden Seiten der besagten Unterlage abgeschieden und danach getrocknet wird, dadurch gekennzeichnet,

dass das Metallpulver ein Gemisch aus Elektrolytzinkpulver und Magnesiumpulver im Gewichtsverhältnis 84 : 16 ist,

dass das abgeschiedene Gemisch aus Metallpulver und temporärem Bindemittel einer Verdichtung unter einem Druck von 1 t/cm$^2$ (ungefähr 10$^8$ Pa) ausgesetzt wird, und

dass nach der Trocknung eine Sinterung bei einer Temperatur von 500-600 °C in einem Mikrowellenofen erfolgt.

2. Verfahren nach Anspruch 1, dadurch gekennzeichnet, dass die Sinterung über einen Zeitraum von 10 bis 20 Sekunden erfolgt.